# EUROPEAN PATENT SPECIFICATION

(11) **EP 1 560 344 B1**
(45) Date of publication and mention of the grant of the patent: **10.05.2017**
(21) Application number: 05000998.4
(22) Date of filing: 19.01.2005
(51) Int. Cl.: H04B 1/69

(54) **Wireless ultra wideband network having frequency BIN transmission level setting and related methods**
Drahtloses ultrabreitbandiges Netzwerk mit Einstellung des Übertragungsleitung für jede Frequenz und entsprechende Verfahren
Réseau sans fil à bande ultra-large avec détermination de niveau de transmission pour chaque fréquence et procédés correspondants

(30) Priority: 28.01.2004 US 539683 P; 12.10.2004 US 963392
(43) Date of publication of application: 03.08.2005
(73) Proprietor: HARRIS CORPORATION, Melbourne, FL 32919 (US)
(72) Inventor: Roberts, Richard D., Melbourne FL 32904 (US)
(74) Representative: Schmidt, Steffen J.

(56) References cited:
- US-A1- 2004 008 617
- US-B1- 6 560 463
- PORCINO D: "Coexistence of UWB technology with FWA services" MICROWAVE CONFERENCE, 2003. 33RD EUROPEAN 7-9 OCT. 2003, PISCATAWAY, NJ, USA,IEEE, vol. 2, 7 October 2003 (2003-10-07), pages 857-860, XP010681030 ISBN: 1-58053-835-5

## Description

### Background of the Invention

Ultra wideband (UWB) is currently expected to become the preferred format for wireless communications in certain short range applications, such as personal area networks (PANs), for example. By way of example, a PAN may include a number of household electronic devices such as video recorders, personal computers, high-definition televisions (HDTVs), etc., which communicate video, audio, and other data therebetween. UWB technology is particularly attractive for PANs not only because it allows large amounts of digital data to be transmitted over a short distance at very low power, but it also has the ability to carry signals through obstacles (doors, etc.) that otherwise tend to reflect signals at narrower bandwidths and higher power.

As a result of the significant interest in UWB communications, an Institute for Electrical and Electronic Engineering (IEEE) working group has been tasked with developing standards for UWB communications in wireless PANs. In particular, the IEEE802.15.3a working group is developing a high-speed UWB physical layer (PHY) enhancement to the general 802.15.3 WPAN standard for applications which involve imaging and multimedia.

One of the leading UWB waveforms in the IEEE802.15.3a selection process is frequency hopping orthogonal frequency division multiplexing (FH-OFDM). While much progress has been made in developing the framework for FH-OFDM, many areas remain to be fully developed. One such area is interference mitigation. In one proposal submitted November 10, 2003 by Batra et al. entitled "Multi-band OFDM Physical Layer Proposal for IEEE 802.15 Task Group 3a," which is hereby incorporated herein in its entirety by reference, the use of a front-end pre-select filter in UWB receivers is proposed to reject out-of band noise and interference.

Other interference mitigation techniques have also been proposed for UWB communications. By way of example, U.S. Patent No. 6,560,463 to Santhoff discloses a UWB communication system which includes a transceiver configured to receive a UWB communication signal, which has embedded power level data. A measurement circuit in the transceiver measures the strength of the received signal. An attenuation factor is computed that compares the measured signal strength to the data embedded in the signal. An adaptive circuit uses the attenuation factor to select a power level for a next transmission. The transceiver also has a positioning circuit that is used to accurately determine the distance from the transceiver to the source of the communication signal, and the adaptive circuit uses the distance to tune the power level for the next transmission. This patent states that the accurate selection of the lowest acceptable power level minimizes interference between communication cells, thereby increasing reliability and optimizing bandwidth utilization.

Document XP010681030 discusses the issue of coexistence of UWB communication devices and existing radio services in the frequency band 3.1 - 10.6 GHz. Further it discloses that assessment of the possible interference caused by UWB devices is fundamental to guarantee a peaceful coexistence between UWB devices and other systems. As one of the approaches of mitigation interference this document proposes that UWB devices should be configured to use minimum possible power sufficient to support QoS requirements.

Document US 2004/08617 discloses an algorithm for active detection and avoidance of interferers in a multi-carrier UWB communications system. According to this document, the entire transmit band is scanned, and if any interferers detected, the frequency used by the interferers would be avoided. The frequency band is avoided by zeroing the data. The data is zeroed either by using a zero pad unit, or, alternatively, by using of a programmable filter.

Document XP007919737 discloses measuring the interference temperature and make a transmit/not transmit decision based on this measurement. If the result of this analysis were below the interference temperature limit set for that location, the device would transmit. Receive sites of a licensed service can also measure the temperature and communicate those measurements to a central site, where the interference temperature profile for the region would be computed. A message could be broadcast indicating the temperature values over that region and whether devices would or could not transmit on certain frequencies. A grid of monitoring stations can be established that would continuously examine the RF energy levels in specified bands, process that data to derive interference temperatures, and then broadcast that data to subject transmitters on a dedicated frequency, with instructions how to respond. To the extent that the interference temperature limit in a band is not reached, there could be opportunities for other transmitters, whether licensed or unlicensed, to operate in the band at higher power levels than are currently authorized.

Despite the advancements in UWB communications, further improvements may be required, such as for implementing the IEEE 802.15 standards. This may be particularly true in the area of interference mitigation.

### Summary of the Invention

In view of the foregoing background, it is therefore an object of the present invention to provide a UWB wireless network providing enhanced transmission level setting features based upon existing interference levels and related methods.

This and other objects, features, and advantages in accordance with the present invention are provided by a ultra wideband (UWB) wireless network including a plurality of UWB wireless devices communicating over a plurality of UWB frequency bins extending over a UWB frequency range. At least one of the UWB wireless devices may be for determining an existing interference level associated with at least one of the UWB frequency bins, and setting a desired transmission level for use with the at least one UWB frequency bin. In particular, the desired transmission level may be set based upon the existing interference level to keep a predicted overall interference level of the at least one UWB frequency bin below an interference ceiling.

More specifically, the existing interference level may be an interference noise temperature level, and the interference ceiling may be an interference noise temperature ceiling. Thus, the transmission level for one or more frequency bins may advantageously be individually set to a maximum level that will still keep the overall interference noise temperature level under an interference noise temperature ceiling.

The UWB wireless device may determine the existing interference noise temperature level by determining a plurality of successive signal levels associated with the at least one UWB frequency bin, determining an interference noise floor based upon the successively determined signal levels, and determining the interference noise temperature level based upon the interference noise floor. Moreover, the UWB wireless device may determine the interference noise floor by generating a histogram based upon the successively determined signal levels, and determining the interference noise floor based upon the histogram.

In addition, the UWB wireless device may have a gain level and a noise level associated therewith. As such, the UWB wireless device may determine the existing interference noise temperature level based upon the interference noise floor and the gain and noise levels associated with the UWB wireless device. The UWB wireless device may include a fast Fourier transform (FFT) module and/or a discrete Fourier transform (DFT) for determining the successive signal levels, for example.

The UWB wireless device may also communicate the desired transmission level to another UWB wireless device for use in communications therewith. It may further determine the existing interference level when it is not communicating with another UWB wireless device. By way of example, the UWB frequency bins may be orthogonal frequency division multiplexing (OFDM) frequency bins, and the at least one UWB wireless device may perform frequency hopping.

A UWB wireless communications method aspect of the invention may include using a plurality of UWB wireless devices to communicate over a plurality of UWB frequency bins extending over a UWB frequency range. The method may further include determining an existing interference level associated with at least one of the UWB frequency bins, and setting a desired transmission level for use with the at least one UWB frequency bin based upon the existing interference level to keep a predicted overall interference level of the at least one UWB frequency bin below an interference ceiling.

### Brief Description of the Drawings

FIG. 1 is schematic block diagram of a UWB wireless network in accordance with the present invention.
FIG. 2 is a more detailed schematic block diagram of the UWB device controller as shown in FIG. 1.
FIG. 3 is a graph of a UWB channel with sub-bands and frequency bins therein illustrating signal levels exceeding a first threshold when the bins are not in use in accordance with the present invention.
FIG. 4 is a graph of the UWB channel of FIG. 3 and frequency bins therein illustrating signal levels exceeding a second threshold when the bins are in use in accordance with the present invention.
FIG. 5 is a diagram of a prior art UWB media access layer (MAC) superframe.
FIG. 6 is a signal flow diagram of the communication of a do-not-use frequency list between UWB devices in accordance with the present invention.
FIG. 7 is a schematic block diagram of another UWB wireless network in accordance with the present invention.
FIG. 8 is a more detailed schematic block diagram of the UWB device controller as shown in FIG. 7.
FIG. 9 is a histogram of the OFDM bin energy for use in determining an existing interference noise temperature in accordance with the present invention.
FIGS. 10 and 11 are flow diagrams for generating UWB frequency bin do-not-use lists in accordance with the present invention.
FIGS. 12 and 13 are flow diagrams illustrating methods for setting UWB frequency bin desired transmission levels to keep an interference level of the frequency bin below an interference ceiling in accordance with the present invention.

### Detailed Description of the Preferred Embodiments

The present invention will now be described more fully hereinafter with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout, and prime notation is used to indicate similar elements in alternate embodiments.

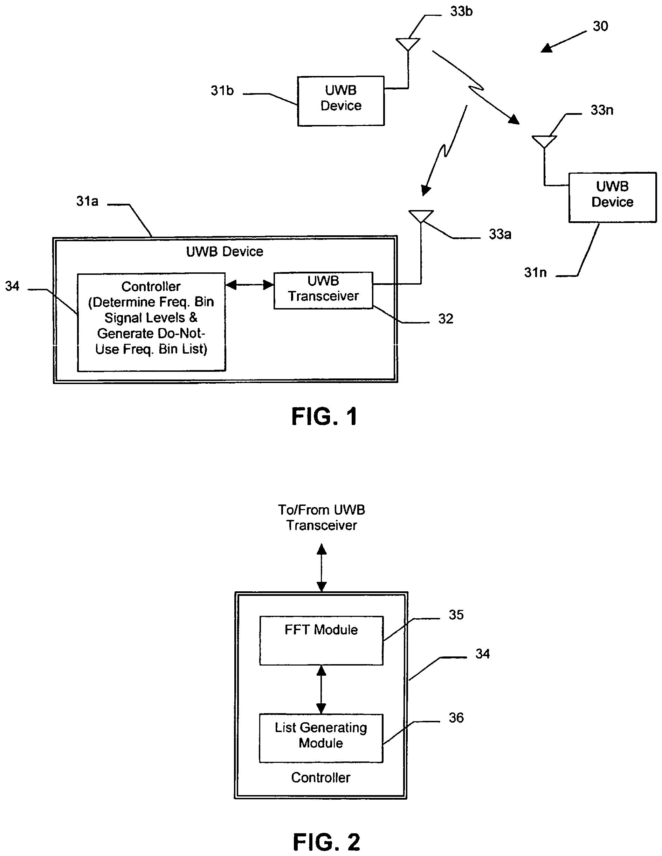

Referring initially to FIG. 1, a ultra wideband (UWB) wireless network **30** in accordance with the present invention illustratively includes a plurality of UWB wireless devices **31a-31n** communicating over a plurality of UWB frequency bins extending over a UWB frequency range. By way of background, the frequency range approved for UWB communications by the FCC in the U.S. extends from 3.1 GHz to 10.59925 GHz. The proposed IEEE 802.15.3 multi-band UWB approach involves sub-dividing this 7.5 GHz spectrum width into several 528 MHz sub-bands. The sub-bands are grouped into five logical channels, some of which will be mandatory for all UWB devices, while others will be optional. Furthermore, for the proposed FH-OFDM structure, each sub-band is further subdivided into 128 4.125 MHz OFDM frequency bins, giving a total of 1818 bins which are numbered 0 through 1817.

During normal operation, the devices **31a-31n** illustratively include respective antennas **33a-33n,** and these devices establish UWB communications links between one another and communicate via these links in accordance with the appropriate UWB standards, such as those outlined in the 802.15.3 and 3a proposals, for example. These devices then communicate accordingly over some grouping (e.g., a channel) of the above-noted UWB frequency bins, as will be appreciated by those skilled in the art.

More particularly, the UWB device **31a** illustratively includes a UWB transceiver **32** and associated antenna **33a,** and a controller **34** coupled to the UWB transceiver. It should be noted that the other UWB devices **31** may include similar components, which are not shown for clarity of illustration. In an FH-OFDM device, the controller **34** will preferably include a fast Fourier transform (FFT) module **35** that can be used to perform a spectral scan across the frequency bins of the sub-band(s) of interest in a manner similar to a spectrum analyzer. A discrete Fourier transform (DFT) module may also be used, as will be appreciated by those skilled in the art.

In accordance with the present invention, the FFT module **35** is advantageously used to determine a respective actual signal level associated with each UWB frequency bin of interest (i.e., in the UWB channel(s) or sub-bands being used). The controller **26** also illustratively includes a list generating module **36,** which generates a do-not-use UWB frequency bin list by comparing each actual signal level with at least one interference threshold. By way of example, the FFT module **35** and the list generating module **36** may be implemented as software modules to be executed by a processor, as will be appreciated by those skilled in the art.

In the case where the controller **34** and transceiver **32** operate using FH-OFDM, the frequency of narrowband interference can advantageously be identified to within the FFT accuracy of one OFDM bin. Thus, the UWB wireless devices **31a-31n** (or at least some of these devices) can avoid using those frequency bins experiencing excessive interference to thereby provide more reliable UWB communications.

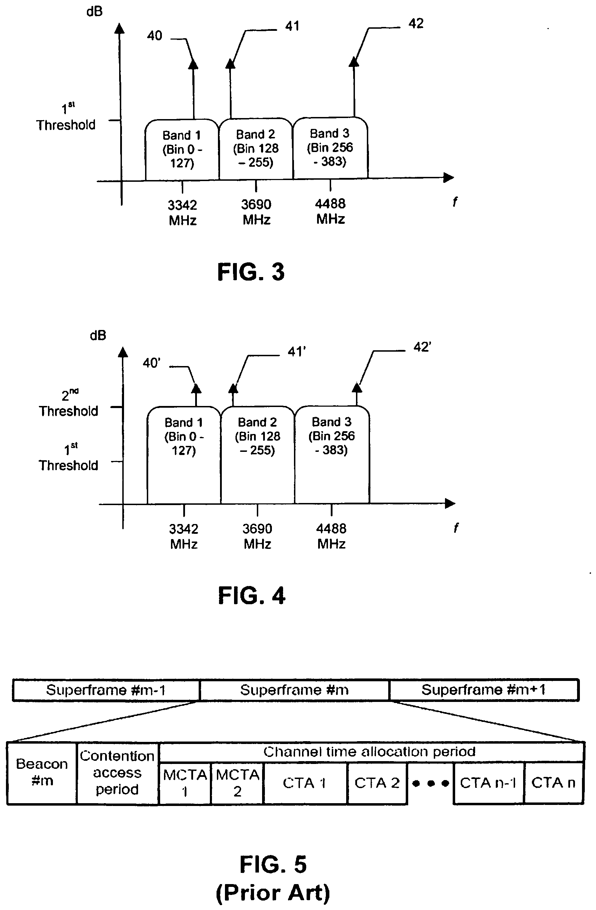

The determination of the actual signal levels will be further understood with reference to FIGS. 3 and 4, each of which illustrates a UWB channel including three sub-bands. At each frequency hop, the FFT module **35** determines which frequency bins are experiencing interference energy by comparing the actual, measured signal level for that bin with one of two interference thresholds. More particularly, when the frequency bin is not in use, then a first interference threshold is used, as seen in FIG. 3. In the illustrated example, the first sub-band, which is centered at 3,342 MHz, has a bin with a signal level above the first interference threshold, as represented by the arrow **40**. The second and third sub-bands, which are centered at 3,690 and 4,488 MHZ, respectively, also have frequency bins with signal levels above the first threshold, as represented by the arrows **41**, **42**.

The first interference threshold is preferably an expected average energy value for when no transmissions are occurring over the given frequency bin. As seen in FIG. 4, a second threshold, which is higher than the first threshold, is used when the particular frequency bin in question is in use. The second threshold may similarly be an expected average energy value for when a frequency bin is in use. It should be noted that other interference thresholds beside average values may be used, as will be appreciated by those skilled in the art. For example, the first and second interference thresholds may simply be maximum allowable or desired thresholds.

The monitoring/scanning of the UWB frequency range of interest may be accomplished by observing link activity within the UWB media access control (MAC) superframe. Referring more particularly to FIG. 5, the IEEE 802.15.3 MAC superframe is a representative packet link superframe. This superframe includes three main periods, namely a beacon period, a contention access period (CAP), and a channel time allocation period (CTAP). A piconet controller (PNC) transmits beacons at the beginning of every superframe during the beacon period, and new UWB wireless devices join a piconet during each CAP. The beacon period is used to set the timing allocations and to communicate management information for the piconet. The beacon consists of the beacon frame, as well as any announce commands sent by the PNC as a beacon extension.

The CAP is used to communicate commands and/or asynchronous data if it is present in the superframe. The CTAP is composed of channel time allocations (CTAs), including management CTAs (MCTAs). CTAs are used for commands, isochronous streams and asynchronous data connections. In FIG. 5, the MCTAs are shown first, but the PNC is allowed to place any number of them at any position in the superframe.

The length of the CAP is determined by the PNC and communicated to the devices in the piconet via the beacon. However, the PNC is able to replace the functionality provided in the CAP with MCTAs, except in the case of the 2.4 GHz PHY where the PNC is required to allow devices to use the CAP. MCTAs are a type of CTA that are used for communications between the devices and the PNC. The CAP uses CSMA/CA for the medium access. The CTAP, on the other hand, uses a standard TDMA protocol where the devices have specified time windows. MCTAs are either assigned to a specific source/destination pair and use TDMA for access, or they are shared CTAs that are accessed using the slotted aloha protocol, as will be appreciated by those skilled in the art.

The UWB device **31a** preferably monitors a particular UWB frequency range for narrowband interference activity during those periods when it is not communicating with other devices (i.e., when the PNC is not in use), for example. Once the list generating module determines the frequency bins which have an actual signal level above the appropriate threshold, it logs an 11-bit binary value for each of the 1,818 frequency bins that is suffering interference. By way of example, suppose that interference activity is observed at 4.7 GHz, between 5.20 GHz to 5.22 GHz and at 7.3 GHz. If this interference maps to bins 388, 509, 510, 511, 512, 513, 514 and 1018, then the list generating module **36** would generate and store a do-not-use frequency bin list including each of these bin numbers.

The UWB wireless device **31a** then communicates the table to one or more other devices in the network **30**, which also stores the list. Then, when these devices communicate with one another, they will not use those frequencies included in the stored list (unless this feature is disabled, as will be discussed further below). Of course, the list may be updated at periodic or intermittent intervals, or when a measured quality-of-service (QoS) level indicates that a new list needs to be generated, for example, as will be appreciated by those skilled in the art. It should also be noted that other devices in the network **30** besides device **31a** may also generate do-not-use frequency bin lists as described above in certain embodiments, if desired.

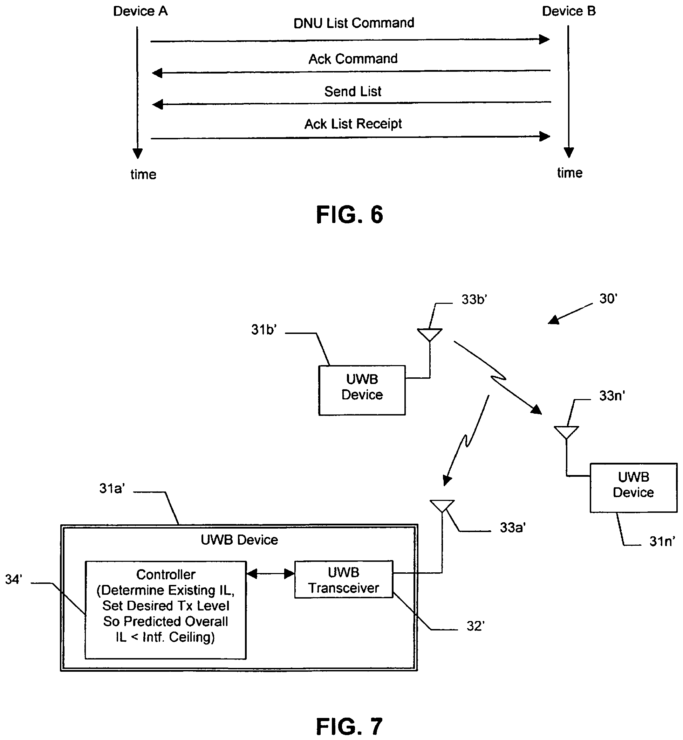

Referring more particularly to FIG. 6, to accommodate exchange of the do-not-use frequency bin list between different devices **31**, an additional command (DNU List Command) may be introduced into the MAC command structure for requesting that the do-not-use list be sent. Once this command is received, the receiving device (device B in the illustrated example) returns an acknowledge (ACK) command back to device A. Device B then sends the do-not-use frequency bin list to device A, which returns an ACK list receipt to device B. This notifies device B that the table was correctly received based, for example, on a correct cyclic redundancy check (CRC) checksum, as will be appreciated by those skilled in the art.

One further MAC modification which may be implemented in certain embodiments is to allow use of the do-not-use frequency bin list to be suspended. One way to do this is to add a bit to each transmitted packet header to let the receiving device know whether the list is to be used (e.g., 0 indicates that the list is not to be used, 1 indicates that it is to be used, or vice-versa). An example of when it may not be desirable for the transmitting device to use the list is in a multi-cast environment where there is more than one receiver.

In certain applications, it may be desirable to use a template or default do-not-use frequency bin list as a starting point. For example, this might be done to tailor the UWB spectrum to meet a unique regional regulatory frequency requirements. This may be accomplished by loading the template into the PHY information management data base. The default template would be read prior to all transmissions and would be common to all devices within the piconet. Thus, the use of the do-not-use bit in the header noted above could be restricted to making command changes to the do-not-use frequency list during link time. This would allow the transmitting device to adaptively adjust the spectrum for dynamic interference environments, as will be appreciated by those of skill in the art.

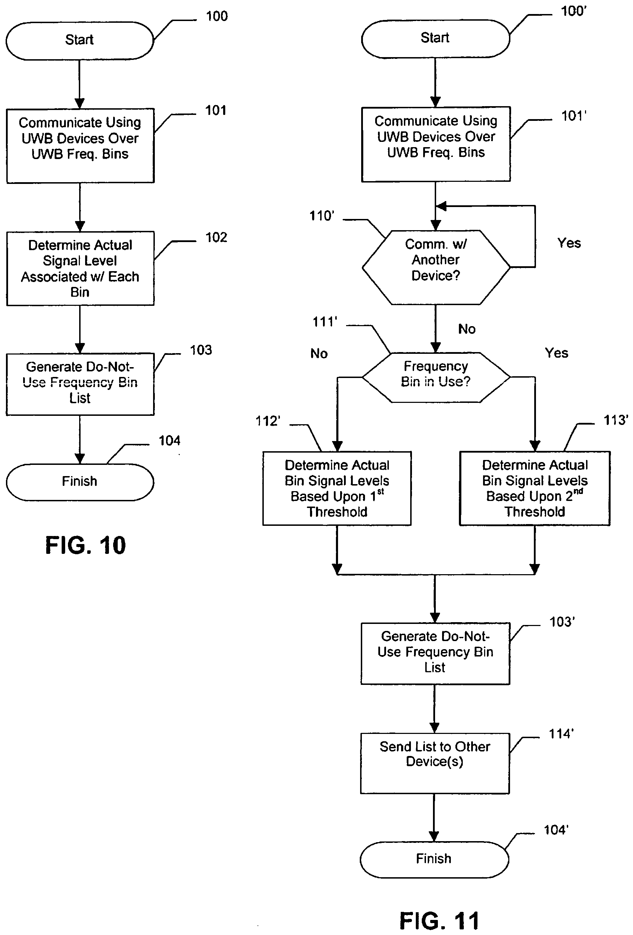

A wireless ultra wideband (UWB) communications method aspect of the invention will now be described with reference to FIG. 10. The method begins (Block **100**) with using a plurality of UWB wireless devices **31** to communicate over a plurality of UWB frequency bins extending over a UWB frequency range, as discussed above, at Block **101**. A respective actual signal level associated with each UWB frequency bin is then determined, at Block **102**, and a do-not-use UWB frequency bin list is then generated by comparing each actual signal level with at least one interference threshold, at Block **103**, as further discussed above, thus concluding the illustrated method (Block **104**).

Further method aspects will now be described with reference to FIG. 11. Prior to determining the actual signal levels, the UWB wireless device **31a** may first determine whether it is engaged in communications with another device, at Block **110'**. If so, it will wait until the communications are completed to begin the actual signal level determination process. An initial determination is made as to whether the particular frequency bin is in use, at Block **111**', which may be done on an individual basis, or at the sub-band or channel level, depending the particular implementation. If the frequency bin is not in use, the first threshold is used for comparison, at Block **112**', otherwise the second (higher) threshold is used, at Block **113',** as discussed above. Again, once generated the do-not-use frequency list is preferably communicated to one or more other devices for use in communications therewith.

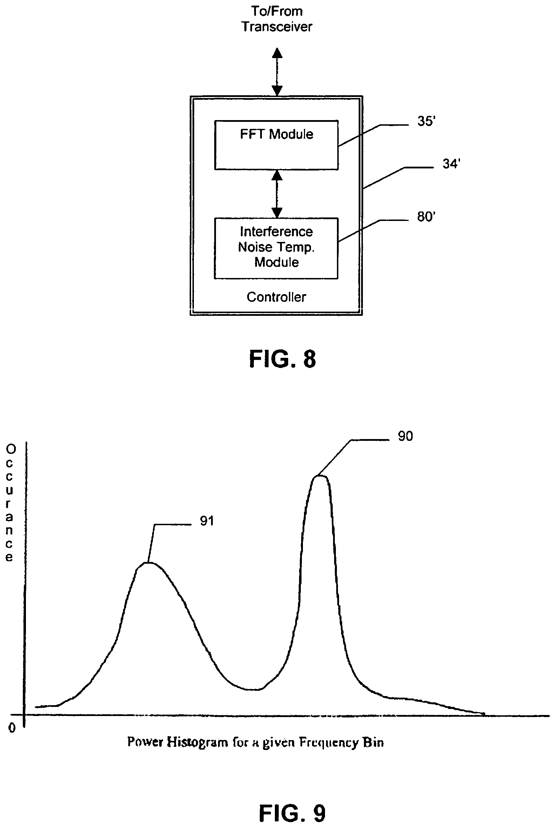

Another related aspect of the invention will now be described with reference to FIGS. 7 and 8. Generally speaking, in the illustrated UWB network **30'** the UWB wireless device **31a'** determines an existing interference level, such as interference noise temperature, associated with one or more of the UWB frequency bins. The device **31a'** then sets a desired transmission level for use with the UWB frequency bin(s) based upon the existing interference level to keep a predicted overall interference level of the at least one UWB frequency bin below an interference ceiling. By way of example, the interference level may be an interference noise temperature ceiling mandated by a governing authority, such as the FCC. The device **31a'** therefore advantageously determines the maximum amount of transmission power that may be used for a given bin(s), yet still remain within regulatory guidelines to maximize transmission capacity.

As noted above, an FH-OFDM device can perform a spectral analysis of the UWB channel during "dead time" when it is not actively participating in data transfer with another device. The spectral analysis is accomplished by monitoring and measuring the energy in each OFDM bin. In accordance with this aspect of the invention, enough measurements of the signal level in each bin are taken to extract the interference noise floor at each OFDM frequency bin. This can be done by taking multiple measurements and constructing a numerical histogram of energy in each frequency bin, which may be done by an interference noise temperature module **80'.**

An exemplary histogram is shown in FIG. 9. At any given time, a frequency bin will either have UWB transmissions therein, or it will have only residual interference noise. The histogram may be used to separate these two cases. Preferably, a separate numeric histogram is generated for each frequency bin (although all bins need not be monitored in all applications), and thus 1,818 histograms will be created. Again, each histogram is generated based upon multiple spectral measurements.

In the illustrated histogram it may be seen that the signal energy is bifurcated into two segments, namely an upper segment **90** which represents an active UWB signal, and a lower segment **91** that represents some residual interference noise floor. In those cases where there is no UWB energy present during the generation of the histogram, only the lower segment would be present. The power in the lower segment **91** is used to determine the noise floor.

By knowing the variance of the lower segment **91** data, the receiver gain of the transceiver **32'** at the time that the histogram was generated, the receiver noise figure of the transceiver, and by having an estimate of the antenna **33'** gain characteristics, the interference noise level can be accurately estimated, as will be appreciated by those skilled in the art. Hence, the interference noise temperature that exists at a given particular frequency bin may also be estimated. Again, this information is preferably ascertained for each 4.125 MHz wide frequency bin across the UWB spectrum, although this need not be the case in all embodiments.

The interference noise temperature data generated as described above may be stored in a column of a table with 1,818 rows (i.e., one row for each frequency bin). Another column in the table may include the applicable FCC-imposed interference noise temperature. The difference between these vales is used to calculate a maximum allowable TX power, on a per frequency bin basis, that the transmitting device may emit and still operate within FCC limits. These calculated values may be included in yet another column associate with the table. This last column would be used by a transmitting UWB wireless device **31** to adjust the amplitude associated with each OFDM frequency bin on a per-bin basis. As will be appreciated by those skilled in the art, this may be done relatively easily with OFDM since the modulation starts in the frequency domain at the transmitter prior to the transmission inverse FFT (IFFT) that results in a time waveform for transmission.

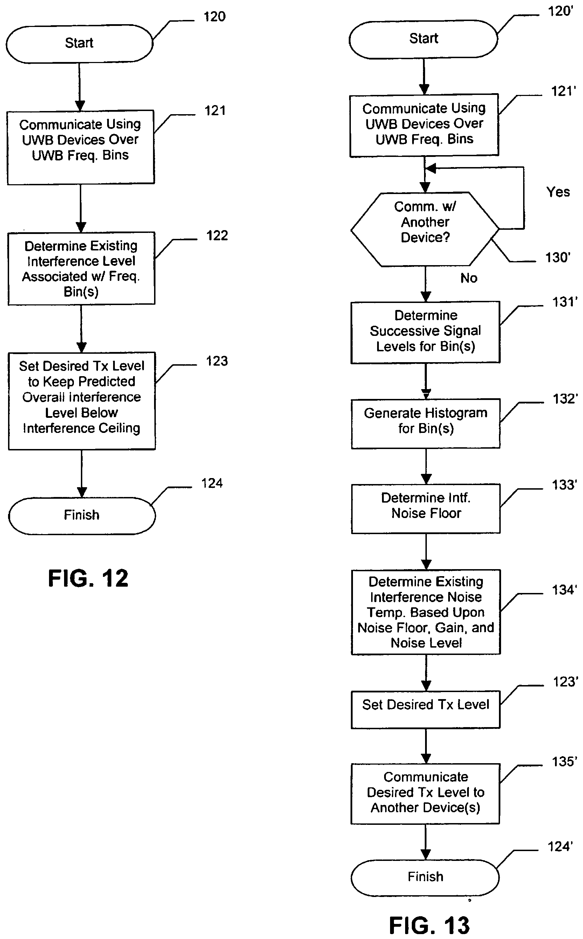

Another UWB wireless communications method aspect of the invention for setting the transmission power level as described above is now described with reference to FIG. 12. Beginning at Block **120**, a plurality of UWB wireless devices **31a'-31n'** communicate over a plurality of UWB frequency bins extending over a UWB frequency range, at Block **121**, as discussed above. An existing interference level associated with at least one of the UWB frequency bins is determined, at Block **122**. Further, a desired transmission level is set for use with the at least one UWB frequency bin based upon the existing interference level to keep a predicted overall interference level of the at least one UWB frequency bin below an interference ceiling, at Block **123**, as further discussed above, thus concluding the illustrated method (Block **124**).

Additional method aspects will be further understood with reference to FIG. 13. In particular, prior to determining the interference noise temperature, it may first be determined whether the particular device is engaged in communications, at Block **130'.** If so, the device waits until the communications have ceased, and then it begins the interference noise temperature determination. This includes determining a plurality of successive signal levels for one or more of the bins (Block **131'**), generating a histogram for each frequency bin based upon the successively determined signal levels (Block **132'**), and determining the interference noise floor based upon the histogram (Block **133'**), as discussed above.

The existing interference noise temperature may then be determined using the interference noise floor, and the gain and noise level associated with the device **31a',** at Block **134',** and the desired transmission level may then be set accordingly for the bin(s), at Block **123'**, as described further above. The desired transmission levels, which may be embodied in a table as described above, may then be communicated to one or more other devices **31'** for use in communications therebetween, at Block **135'.**

By way of example, the various aspects of the present invention described above are particularly well suited for products or devices used in wireless PANs with relatively short range (e.g., less than 10 meters) and high bit rates (e.g., greater than 100 Mbps). Although the invention has generally been described in the context of the proposed IEEE802.15.3 and 3a standards for clarity of explanation, it may be used in other UWB communications applications as well, as will be appreciated by those skilled in the art.

## Claims

1. An ultra wideband UWB wireless network (30') comprising:
a plurality of UWB wireless devices (31a' - 31n') communicating over a plurality of UWB frequency bins (122') extending over a UWB frequency range (121'); wherein
at least one of said UWB wireless devices (31a' - 31n') is adapted for determining an existing interference level comprising an existing interference noise temperature level associated with at least one of the UWB frequency bins (122'), and at least one of said UWB wireless devices (31a' - 31n') is adapted for setting a desired transmission level of said one of the UWB wireless devices (31a' - 31n') for use with the at least one UWB frequency bin (122') based upon the existing interference level, wherein said transmission level for use with at least one UWB frequency bin (122') is set to a maximum level which allows keeping the predicted overall interference level of the at least one UWB frequency bin (122') below an imposed interference ceiling, and wherein the maximum level is calculated based on the difference between a determined interference noise temperature and an imposed interference noise temperature.

2. The UWB wireless network of claim 1 wherein said at least one UWB wireless device (31a'- 31n') determines the existing interference noise temperature level by:
determining a plurality of successive signal levels associated with the at least one UWB frequency bin (122');
determining an interference noise floor based upon the successively determined signal levels; and
determining the interference noise temperature level based upon the interference noise floor.

3. The UWB wireless network of claim 2 wherein said at least one UWB wireless device (31a'- 31n') determines the interference noise floor by:
generating a histogram based upon the successively determined signal levels; and
determining the interference noise floor based upon the histogram.

4. The UWB wireless network of claim 2 wherein said at least one UWB wireless device (31a' - 31n') has a gain level and a noise level associated therewith; and wherein said at least one UWB wireless (31a'- 31n') device determines the existing interference noise temperature level based upon the interference noise floor and the gain and noise levels associated with said at least one UWB wireless device (31a' - 31n').

5. A ultra wideband UWB wireless communications method comprising:
using a plurality of UWB wireless devices to communicate over a plurality of UWB frequency bins extending over a UWB frequency range;
determining an existing interference level comprising an existing interference noise temperature level associated with at least one of the UWB frequency bins, and setting a desired transmission level of one of the UWB wireless devices for use with the at least one UWB frequency bin based upon the existing interference level, and
wherein said transmission level for use with at least one UWB frequency bin is set to a maximum level which allows keeping the predicted overall interference level of the at least one UWB frequency bin below an imposed interference ceiling and wherein the maximum level is calculated based on the difference between a determined interference noise temperature and an imposed interference noise temperature.

6. The method of claim 5 wherein determining the existing interference noise temperature level comprises:
determining a plurality of successive signal levels associated with the at least one UWB frequency bin;
determining an interference noise floor based upon the successively determined signal levels; and
determining the interference noise temperature level based upon the interference noise floor.

7. The method of claim 5 wherein determining the interference noise floor comprises:
generating a histogram based upon the successively determined signal levels; and
determining the interference noise floor based upon the histogram.

8. The method of claim 5 wherein determining the successive signal levels comprises determining the successive signal levels using a fast Fourier transform FFT module.

## Patentansprüche

1. Drahtloses Ultrabreitband-UWB-Netzwerk (30'), umfassend:
eine Vielzahl an drahtlosen UWB-Geräten (31a'-31n'), die über eine Vielzahl von sich über einen UWB-Frequenzbereich (121') erstreckenden UWB-Frequenz-Bins (122') kommunizieren; wobei
wenigstens eines der drahtlosen UWB-Geräte (31a'-31n') zum Bestimmen eines bestehenden Interferenzpegels eingerichtet ist, der einen bestehenden mit wenigstens einem der UWB-Frequenz-Bins (122') verbundenen Interferenzrauschen-Temperatur-Pegel umfasst, und
wenigstens eines der drahtlosen UWB-Geräte (31a'-31n') zum Festlegen eines Sollübertragungspegels des einen der drahtlosen UWB-Geräte (31a'-31n') zum Benutzen mit dem wenigstens einen UWB-Frequenz-Bin (122`) basierend auf dem bestehenden Interferenzpegel eingerichtet ist, wobei der Übertragungspegel zum Benutzen mit wenigstens einem UWB-Frequenz-Bin (122') auf einen Maximalpegel festgesetzt wird, der es erlaubt, den vorherbestimmen Gesamtinterferenzpegel des wenigstens einen Frequenz-Bins (122') unter einer auferlegten Interferenzobergrenze zu halten, und wobei der Maximalpegel basierend auf der Differenz zwischen einer bestimmten Interferenzrauschen-Temperatur und einer auferlegten Interferenzrauschen-Temperatur berechnet wird.

2. Drahtloses UWB-Netzwerk nach Anspruch 1, wobei das wenigstens eine drahtlose UWB-Gerät (31a'-31n') den bestehenden Interferenzrauschen-Temperatur-Pegel bestimmt durch:
Bestimmen einer Vielzahl von aufeinanderfolgenden Signalpegeln, die mit dem wenigstens einen UWB-Frequenz-Bin (122') verbunden sind;
Bestimmen einer Interferenzrauschen-Untergrenze basierend auf den aufeinanderfolgenden Signalpegeln; und
Bestimmen des Interferenzrauschen-Temperatur-Pegels basierend auf der Interferenzrauschen-Untergrenze.

3. Drahtloses UWB-Netzwerk nach Anspruch 2, wobei das wenigstens eine drahtlose UWB-Gerät (31a'-31n') die Interferenzrauschen-Untergrenze bestimmt durch:
Erzeugen eines Histogramms basierend auf den aufeinanderfolgenden bestimmten Signalpegeln; und
Bestimmen des Interferenzrauschen-Temperaturpegels basierend auf dem Histogramm.

4. Drahtloses UWB-Netzwerk nach Anspruch 2, wobei das wenigstens eine drahtlose UWB-Gerät (31a'-31n') einen Gain-Pegel und einen damit verbundenen Rausch-Pegel aufweist; und wobei das wenigstens eine drahtlose UWB-Gerät (31'-31n') den bestehenden Interferenzrauschen-Temperatur-Pegel basierend auf der Interferenzrauschen-Untergrenze und den Gain- und Rausch-Pegeln, die mit dem wenigstens einen drahtlosen UWB-Gerät (31a'-31n') verbunden sind, bestimmt.

5. Verfahren für eine drahtlose ultrabreitband Kommunikation, umfassend:
Verwenden einer Vielzahl von drahtlosen UWB-Geräten zum Kommunizieren über eine Vielzahl von sich über einen UWB-Frequenzbereich erstreckender UWB-Frequenzen;
Bestimmen eines bestehenden Interferenzpegels, der einen bestehenden mit wenigstens einem der UWB-Frequenz-Bin verbundenen Interferenzrauschen-Temperatur-Pegel umfasst, und
Festlegen eines Sollübertragungspegels eines der drahtlosen UWB-Geräte zum Verwenden mit dem wenigstens einen UWB-Frequenz-Bin basierend auf dem bestehenden Interferenzpegel, und
wobei der Übertragungspegel zum Verwenden mit wenigstens einem UWB-Frequenz-Bin auf einen Maximalpegel festgelegt wird, der es erlaubt, den vorherbestimmten Gesamtinterferenzpegel des wenigstens einen UWB-Frequen-Bins unter einer auferlegten Interferenz-Obergrenze zu halten, und wobei der Maximalpegel basierend auf der Differenz zwischen einer bestimmten Interferenzrauschen-Temperatur und einer auferlegten Interferenzrauschen-Temperatur berechnet wird.

6. Verfahren nach Anspruch 5, wobei das Bestimmen des bestehenden Interferenzrauschen-Temperatur-Pegels umfasst:
Bestimmen einer Vielzahl von aufeinanderfolgenden Signalpegeln, die mit dem wenigstens einen UWB-Frequenz-Bin verbunden sind;
Bestimmen einer Interferenzrauschen-Untergrenze basierend auf den aufeinanderfolgenden Signalpegeln; und
Bestimmen des Interferenzrauschen-Temperatur-Pegels basierend auf der Interferenzrauschen-Untergrenze.

7. Verfahren nach Anspruch 5, wobei das Bestimmen der Interferenzrauschen-Untergrenze umfasst:
Erzeugen eines Histogramms basierend auf den aufeinanderfolgenden bestimmten Signalpegeln; und
Bestimmen der Interferenzrauschen-Untergrenze basierend auf dem Histogramm.

8. Verfahren nach Anspruch 5, wobei das Bestimmen der aufeinanderfolgenden Signalpegel ein Bestimmen der aufeinanderfolgenden Signalpegel durch Verwenden eines fast-Fourier-Transformation-FFT-Moduls umfasst.

## Revendications

1. Réseau sans fil UWB à ultra large bande (30') comprenant :
une pluralité de dispositifs sans fil UWB (31a' à 31n') communiquant sur une pluralité de segments de fréquence UWB (122') s'étendant sur une gamme de fréquence UWB (121') ; dans lequel
au moins un desdits dispositifs sans fil UWB (31a' à 31n') est adapté pour déterminer un niveau d'interférences existant comprenant un niveau de température de bruit d'interférences existant associé à au moins un des segments de fréquence UWB (122'), et
au moins un desdits dispositifs sans fil UWB (31a' à 31n') est adapté pour régler un niveau de transmission souhaité dudit un desdits dispositifs sans fil UWB (31a' à 31n') pour une utilisation avec l'au moins un segment de fréquence UWB (122') sur la base du niveau d'interférences existant, dans lequel ledit niveau de transmission permettant une utilisation avec au moins un segment de fréquence UWB (122') est réglé à un niveau maximum qui permet de garder le niveau d'interférences global prédit de l'au moins un segment de fréquence UWB (122') sous un plafond d'interférences imposé, et dans lequel le niveau maximum est calculé sur la base de la différence entre une température de bruit d'interférences déterminée et une température de bruit d'interférences imposée.

2. Réseau sans fil UWB selon la revendication 1, dans lequel ledit au moins un dispositif sans fil UWB (31a' à 31n') détermine le niveau de température de bruit d'interférences existant par :
la détermination d'une pluralité de niveaux de signaux successifs associés à l'au moins un segment de fréquence UWB (122') ;
la détermination d'un plancher de bruit d'interférences basé sur les niveaux de signaux déterminés successivement ; et
la détermination du niveau de température de bruit d'interférences basé sur le plancher de bruit d'interférences.

3. Réseau sans fil UWB selon la revendication 2, dans lequel ledit au moins un dispositif sans fil UWB (31a' à 31n') détermine le plancher de bruit d'interférences par :
la génération d'un histogramme basé sur les niveaux de signaux déterminés successivement ; et
la détermination du plancher de bruit d'interférences basé sur l'histogramme.

4. Réseau sans fil UWB selon la revendication 2, dans lequel ledit au moins un dispositif sans fil UWB (31a' à 31n') possède un niveau de gain et un niveau de bruit qui lui est associé ; et dans lequel ledit au moins un dispositif sans fil UWB (31a' à 31n') détermine le niveau de température de bruit d'interférences existant basé sur le plancher de bruit d'interférences et les niveaux de gain et de bruit associés audit au moins un dispositif sans fil UWB (31a' à 31n').

5. Procédé de communication sans fil UWB à ultra large bande comprenant :
l'utilisation d'une pluralité de dispositifs sans fil UWB pour communiquer sur une pluralité de segments de fréquence UWB s'étendant sur une gamme de fréquence UWB ;
la détermination d'un niveau d'interférences existant comprenant un niveau de température de bruit d'interférences existant associé à au moins un des segments de fréquence UWB, et
le réglage d'un niveau de transmission souhaité d'un des dispositifs sans fil UWB pour une utilisation avec l'au moins un segment de fréquence UWB sur la base du niveau d'interférences existant, et
dans lequel ledit niveau de transmission permettant une utilisation avec au moins un segment de fréquence UWB est réglé à un niveau maximum qui permet de garder le niveau d'interférences global prédit de l'au moins un segment de fréquence UWB sous un plafond d'interférences imposé, et dans lequel le niveau maximum est calculé sur la base de la différence entre une température de bruit d'interférences déterminée et une température de bruit d'interférences imposée.

6. Procédé selon la revendication 5, dans lequel la détermination du niveau de température de bruit d'interférences existant comprend :
la détermination d'une pluralité de niveaux de signaux successifs associés à l'au moins un segment de fréquence UWB ;
la détermination d'un plancher de bruit d'interférences basé sur les niveaux de signaux déterminés successivement ; et
la détermination du niveau de température de bruit d'interférences basé sur le plancher de bruit d'interférences.

7. Procédé selon la revendication 5, dans lequel la détermination du plancher de bruit d'interférences comprend :
la génération d'un histogramme basé sur des niveaux de signaux déterminés successivement ; et
la détermination du plancher de bruit d'interférences basé sur l'histogramme.

8. Procédé selon la revendication 5, dans lequel la détermination des niveaux de signaux successifs comprend la détermination des niveaux de signaux successifs à l'aide d'un module de transformée rapide de Fourier FFT.
